Europäisches Patentamt

European Patent Office

Office européen des brevets

(19)

(11) EP 0 689 088 B1

## (12) FASCICULE DE BREVET EUROPEEN

(45) Date de publication et mention
de la délivrance du brevet:
**29.08.2001 Bulletin 2001/35**

(51) Int Cl.7: **H01L 33/00**, G02F 3/02,
H01L 27/00

(21) Numéro de dépôt: **95401447.8**

(22) Date de dépôt: **20.06.1995**

(54) **Procédé de réalisation d'une matrice de composants à puits quantiques de structure verticale "tout optique"**

Verfahren zur Herstellung einer Anordnung von rein optischen Quantum-Well-Vorrichtungen mit vertikaler Struktur

Method of manufacturing an array of all-optical vertical cavity quantum well components

(84) Etats contractants désignés:
**DE GB**

(30) Priorité: **22.06.1994 FR 9407639**

(43) Date de publication de la demande:
**27.12.1995 Bulletin 1995/52**

(73) Titulaire: **FRANCE TELECOM**
**75015 Paris (FR)**

(72) Inventeurs:
- **Nissim, Yves**
  **F-75020 Paris (FR)**
- **Bensoussan, Marcel**
  **F-92100 Boulogne (FR)**
- **Oudar, Jean-Louis**
  **F-92390 Chatenay Malabry (FR)**
- **Rao, Elchuri**
  **F-92130 Issy les Moulineaux (FR)**

(74) Mandataire: **Warcoin, Jacques et al**
**Cabinet Régimbeau**
**20, rue de Chazelles**
**75847 Paris cedex 17 (FR)**

(56) Documents cités:
**EP-A- 0 248 438**          **US-A- 4 795 241**

- **NONLINEAR OPTICS, vol. 5, no. 1-4, 1993 GB, pages 171-182, SFEZ B G ET AL 'Multiple quantum well microcavities for nonlinear optics'**
- **APPLIED PHYSICS LETTERS., vol. 60, no. 5, Février 1992 NEW YORK US, pages 607-609, SFEZ B G ET AL 'Operation of nonlinear GaAs/AlGaAs multiple quantum well microresonators fabricated using alloy-mixing techniques'**
- **APPLIED PHYSICS LETTERS., vol. 49, no. 9, Septembre 1986 NEW YORK US, pages 510-512, DEPPE D G ET AL 'Stripe-geometry quantum well heterostructure Al(x)Ga(1-x)As-GaAs lasers defined by defect diffusion'**
- **APPLIED PHYSICS LETTERS., vol. 64, no. 7, Février 1994 NEW YORK US, pages 869-871, XP 000424215 RIVERA T ET AL 'Reduced threshold all-optical bistability in etched quantum well microresonators'**

# Description

L'invention concerne un procédé de réalisation d'une matrice de composants à puits quantiques de structure verticale fonctionnant en "tout optique", lesdits composants étant formés d'hétérostructures à puits quantiques à base de composés III/V, comprises entre un miroir inférieur et un miroir supérieur dont l'épaisseur est déterminée par la relation de Bragg à la longueur d'onde de fonctionnement.

On sait que ces dispositifs, du fait de leur configuration matricielle (parallélisme) sont le plus souvent nécessaires pour augmenter le débit dans le traitement du signal optique.

Les composants individuels qui se présentent sous forme de pixels sont formés d'une cavité verticale (normale au plan de la surface de l'échantillon) comprise entre un miroir inférieur et un miroir supérieur. La cavité contient des puits quantiques réalisés par une alternance de matériaux composites semiconducteurs. Les miroirs sont de très haute réflectivité. Ces miroirs sont constitués d'alternance de couches semiconductrices ou diélectriques dont l'épaisseur est déterminée par la longueur d'onde de travail du composant suivant les conditions de Bragg. L'excitation de la zone active de ce composant se fait optiquement.

Parmi cette famille formée de composants à structure verticale à puits quantiques sous forme de matrice, on peut mentionner les portes optiques composées de bistables, les lasers à émission par la surface, les amplificateurs, ou les modulateurs tous pompés optiquement.

La fabrication de ce type de dispositif et leur intégration monolithique en micro-optoélectronique nécessite de pouvoir faire varier dans un même plan les propriétés du matériau afin de réaliser latéralement, soit du confinement optique localisé, soit du confinement électronique, soit de l'absorption optique, soit une combinaison des trois. Les techniques de fabrication de ces structures sont actuellement très complexes et ceci est d'un poids très lourd dans le coût du dispositif final.

Les possibilités offertes par les techniques modernes de croissance de couches minces épitaxiées ont ouvert certes un large champ d'applications pour l'obtention d'hétérostructures à puits quantiques pour les dispositifs à semiconducteurs en micro-optoélectronique. Il est possible actuellement de contrôler une croissance de couches minces à la monocouche atomique près. On obtient ainsi des puits quantiques d'une grande qualité avec des interfaces très abruptes où grâce simplement à un paramètre géométrique (épaisseur du puits et/ou insertion dans le puits pendant la croissance d'un plan atomique différent de la matrice), il est possible de réaliser dans une même famille de matériaux (même bâti de croissance, même cellules, même conditions de croissance), la propriété nécessaire (bande interdite, force d'oscillateur ....) pour l'application recherchée. Cependant, cette ingénierie ne donne accès qu'aux propriétés 2D (à deux dimensions), c'est-à-dire aux propriétés de quantification le long de l'axe de croissance.

La mise en matrice des composants micro-opto électroniques pour réaliser des motifs 3D (à trois dimensions) à partir de ces hétérostructures consiste à façonner latéralement la structure. Ceci est obtenu habituellement par une succession d'étapes technologiques qui dépendent du composant à réaliser : masquage, gravure, reprise d'épitaxie, passivation... Ces technologies s'appliquent aux composants à structures verticales, pour lesquels il s'agit de mettre en contact intime des matériaux assez semblables mais ayant néanmoins des propriétés électriques et optiques différenciées afin de réaliser un confinement optique et électrique vertical.

Il existe actuellement deux techniques pour fabriquer des matrices de composants à structure verticale à puits quantiques (pixels) :

- La matrice de pixels peut être réalisée par lithographie et attaque ionique réactive. Dans ce cas, la mise en oeuvre est longue (attaque ionique sur une profondeur de plusieurs microns d'un matériau composé de plusieurs couches de nature différente), la structure n'est plus plane et enfin les flancs de pixels nécessitent une passivation que l'on ne maîtrise pas encore aujourd'hui.

- La matrice de pixels peut être obtenue par désordre d'alliage induit par implantation ionique selon B.G. Sfez et al, Appl. Phys. Lett. 60, 607, 1992, la fabrication est alors coûteuse (implanteur). De plus, le repérage des pixels nécessite l'utilisation d'une technique complémentaire (cartographie de luminescence par exemple), car le masque d'implantation définissant la position des pixels doit être enlevé pour la suite des étapes technologiques.

Enfin, la technique d'implantation ionique introduit dans les régions implantées des défauts structuraux et des impuretés qui ne sont pas souhaitables pour conserver l'intégrité des propriétés optiques des structures.

On sait par ailleurs qu'il est possible d'induire des défauts sous un encapsulant qui est souvent un diélectrique à base de silicium.

D.G. Deppe et al. "Strippe-Geometry Quantum Well Heterostructure AlGaAs/GaAs Lasers Defined by Defect Diffusion", Appl. Phys. Lett. 49, 510, 1986 et L. J. Guido et al."Effects of Dielectric Encapsulation and As Overpressure on Al-Ga Interdiffusion in AlGaAs-GaAs Quantum Well Heterostructures", J. of Appl. Phys., 61, 1372 , 1987 ont décrit des lasers à base d'hétérostructures à puits quantiques sous la forme d'une couche d'hétérostructures à puits quantiques recouvertes de bandes parallèles de $Si_3N_4$ encapsulées sous une couche diélectrique qui par recuit induit localement un désordre d'alliage dans la couche d'hétérostructures.

De façon inattendue, il a été trouvé qu'il était possible d'utiliser cette technique d'encapsulation par un diélectrique pour réaliser des matrices de composants à puits quantiques de structure verticale "tout optique".

Par rapport à l'état de l'art considéré, l'invention propose un procédé qui met en oeuvre un encapsulant diélectrique, non seulement pour réaliser des motifs 3D grâce à l'introduction ou non de désordre d'alliage, mais également pour réaliser la passivation de la totalité de la surface de l'échantillon semi-conducteur, également comme facteur autoalignant des structures, et comme partie du miroir extérieur entrant dans la constitution du composant.

L'invention est relative à un procédé tel que mentionné ci-dessus, comprenant les étapes suivantes :

a) ) on forme un miroir inférieur composé d'une ou plusieurs alternances de couches semi-conductrices, par épitaxie sur un substrat,

b) on dépose par épitaxie sur le miroir précédent une zone active formée d'hétérostructures à puits quantiques,

c) on dépose sur ladite zone active une couche diélectrique dont l'épaisseur est donnée par la condition de Bragg et qui fonctionne comme une couche positive, c'est-à-dire une couche mince diélectrique qui ne provoque pas de modification de composition de l'hétérostructure de la zone active après recuit,

d) on grave la couche diélectrique de façon à former un masque d'autoalignement définissant des motifs en forme de plots de telle manière que le masque délimite sous forme matricielle des régions de la face supérieure de la zone active recouvertes et des régions non recouvertes en regard des évidements dus à la gravure de la couche diélectrique,

e) on encapsule d'une couche diélectrique négative, c'est-à-dire une couche mince diélectrique qui provoque une modification de composition de l'hétérostructure de la zone active après recuit, dont l'épaisseur est donnée par la condition de Bragg à la longueur d'onde de travail, la face supérieure de la demi-structure formée à l'étape d)

f) on traite thermiquement la demi-structure encapsulée à une température appropriée pour induire le désordre d'alliage dans les parties de la zone active dont la face supérieure n'est pas recouverte par le masque gravé et former ainsi dans la zone active la matrice de pixels correspondante, de façon à obtenir le miroir de Bragg supérieur.

Selon une variante, on recouvre la couche négative d'une ou plusieurs alternances de couches diélectriques d'indice de réfraction différent, identique ou non aux précédentes. Le nombre d'alternances est optimisé en fonction de la réflectivité recherchée pour le miroir supérieur ainsi constitué, le nombre total de couches devant être pair pour assurer le maximum de réflectivité.

Le procédé selon l'invention permet de réaliser à la fois :

- une interdiffusion localisée dans l'hétérostructure à puits quantiques définissant des pixels dans les zones actives non modifiées,
- Les premières couches d'un miroir supérieur qui s'obtiennent en déposant des couches diélectriques d'indice de réfraction différent dont l'épaisseur est calculée à la longueur d'onde de travail selon les conditions de Bragg compatible avec les gammes d'épaisseur nécessaire pour induire ou non le mélange d'alliage,
- la passivation de toute la surface de l'échantillon par des couches diélectriques, les régions pixellisées utilisant le miroir de Bragg comme protection, les autres régions étant recouvertes selon l'invention d'un diélectrique induisant le mélange d'alliage, l'épaisseur de diélectrique dans ces régions étant choisie dans la gamme d'épaisseur induisant le mélange compatible avec une passivation du semiconducteur.

La structure ainsi obtenue est alors compatible avec toutes conditions de recuit (même pendant une longue durée et à haute température) sans nécessiter une atmosphère contrôlée avec les hydrures ($AsH_3$....) par exemple,

A titre indicatif, l'épaisseur de $SiO_2$ nécessaire pour induire une interdiffusion totale de l'alliage d'un puits quantique GaAs/GaAlAs (850°C/4 heures) est de l'ordre de 400 nm.

Ce procédé permet également de faire varier le degré d'interdiffusion entre 0 et 100 % dans les régions modifiées (non pixellisées) afin d'optimiser l'adaptation électrique ou optique entre zone modifiée et zone non modifiée.

Il permet également selon une variante qui sera décrite ci-après d'obtenir des pixels de tailles submicroniques.

Par l'expression "couche négative", on entend une couche mince diélectrique déposée sur l'hétérostructure à puits quantiques et qui provoque une modification de composition de cette structure après recuit sur des profondeurs de plusieurs microns. Il peut s'agir de couche de type $Si_xO_y$ ou éventuellement $SiO_xN_y$ avec y suffisamment petit pour que la couche à base de $SiO_x$-$N_y$ se comporte comme une couche négative. Ces couches sont bien connues de l'homme du métier. Les couches de cette nature déposées par RTCVD sont appropriées.

Par l'expression "couche positive", on entend une couche mince diélectrique qui, déposée sur une hétérostructure à puits quantiques, ne provoque pas de modification de composition de cette hétérostructure après un recuit identique à celui mentionné précédemment. Il peut s'agir de couche de type $Si_xN_y$ ou éventuellement $SiO_xN_y$ avec dans ce dernier cas y suffisamment grand pour que la couche à base de $SiO_xN_y$ se comporte comme une couche positive. Ces couches sont bien connues de l'homme du métier.

Le degré de mélange induit par une couche négative peut varier selon la tension mécanique induite par le film diélectrique sur la couche. Cette tension mécanique est fonction d'une part de la composition de la couche et d'autre part de l'épaisseur de celle-ci.

Les matériaux capables de réaliser cette modulation sont notamment décrits dans le brevet français FR-A-2 605 647.

La fabrication d'une partie du miroir supérieur des composants s'obtient en déposant des couches diélectriques dont l'épaisseur est calculée à la longueur d'onde de fonctionnement comme une épaisseur de Bragg compatible avec des gammes d'épaisseur nécessaire pour induire ou non le mélange d'alliage.

Les couches minces à puits quantiques sont des matériaux III-V, binaire, ternaire ou quaternaire à base de GaAs ou d'InP.

Parmi ces hétérostructures convenant dans le cadre de la présente invention, on peut citer les alternances de couches formées de la structure $GaAs/Ga_{1-x}Al_xAs$ avec $O \leq x \leq 1$. Mais le procédé peut s'étendre à d'autres types d'hétérostructures $GaAs/Ga_{1-x}In_xAs$ avec $O \leq x \leq 1$ ou $InP/In_xGa_{1-x}As/In_xGa_{1-x}AsP_{1-y}$ avec $O \leq x \leq 1$ et $O \leq y \leq 1$.

On peut citer à titre indicatif les hétérostructures suivantes :

pour le miroir inférieur : 14 périodes $AlAs/Al_{0,1}Ga_{0,9}As$,
pour la couche active : 130 périodes $GaAs/Ga_{0,7}Al_{0,3}As$ (10 nm d'épaisseur pour chaque couche).

Le dépôt de la zone active à puits quantiques sur le miroir inférieur est obtenu de manière classique par épitaxie, c'est-à-dire par la croissance d'une couche monocristalline.

Les techniques classiques de photolithographie et de gravures sont utilisées pour réaliser la géométrie souhaitée du masque d'autoalignement de couches positives.

Une fois le dépôt de la couche négative réalisé, on traite thermiquement l'échantillon ainsi obtenu en le soumettant à une température de recuit donnée, pendant une durée déterminée, en fonction du décalage d'énergie de bande interdite que l'on souhaite obtenir.

Les deux types de recuit employés sont le recuit rapide par lampes halogènes et le recuit conventionnel dans un four classique. Le recuit rapide se caractérise par des temps de montée en température très courts, de l'ordre de 10 secondes pour atteindre 850°C (soit environ 100°C/sec) et des paliers en température de traitement thermique de 0 à quelques dizaines de secondes. Le recuit conventionnel présente des temps de montée de l'ordre de 5 minutes et des durées de paliers de 0 à plusieurs dizaines de minutes.

L'étape de recuit est généralement effectuée à 850°C environ pour le système GaAs/GaAlAs.

Cette méthode conduit au transfert dans les couches actives des motifs du masque d'autoalignement et permet de réaliser des structures verticales (pixels) grâce à un confinement optique et électrique indispensable dans l'intégration monolithique matricielle des différents composants. La variation locale d'indice entre zone modifiée et zone non modifiée peut atteindre des valeurs de l'ordre de $10^{-2}$ assurant le confinement latéral optique dans le pixel à condition que les dimensions latérales ne soient pas trop petites (diamètre du pixel > 2 micromètres).

Pour réaliser des pixels de taille plus petite (micronique et submicronique), il est nécessaire de focaliser la lumière incidente au centre de la cavité pour assurer un confinement optique plus important. La taille (beam waist) du faisceau focalisé à l'intérieur de la cavité et dont le diamètre ultime du pixel peut s'estimer en prenant les relations utilisées dans les lasers fabriqués avec un miroir plan et un miroir sphérique :

$$W_0 = (\lambda d/2\pi)^{1/2}(R^2/d(R\text{-}d))^{1/4}$$

avec $W_0$: taille du faisceau ; d : longueur de la cavité (profondeur du pixel), R : rayon de courbure du miroir sphérique (lentille) et $\lambda$ : longueur d'onde de travail.

Une simple application numérique montre que pour un pixel de d = 2 $\mu m$ de profondeur, une lentille de R = 15 $\mu m$ de rayon de courbure, à $\lambda$=0,85 $\mu m$, il est possible de ramener le diamètre du pixel à une taille submicronique.

En général, le miroir supérieur de cette structure peut se réaliser au moyen de couches minces diélectriques. En effet, les écarts d'indices entre ces différentes couches permettent de réaliser des miroirs de réflectivité importante à toute longueur d'onde avec peu d'alternance de couches. Par exemple, l'utilisation d'une alternance $SiO_2$ (n = 1,45) / $Si_3N_4$ (n = 2,1) permet d'obtenir une réflectivité de 96 % avec seulement quatre bicouches. L'utilisation d'une alternance $SiO_2$ (n = 1,45 / Si (n = 3,5) permet d'obtenir cette même valeur de réflectivité avec seulement deux bicouches. Le choix des matériaux est déterminé en fonction de leurs propriétés optiques et de la longueur d'onde de travail.

Selon une variante du procédé selon l'invention, chaque plot est formé d'une couche positive présentant une courbure de façon à former une lentille de focalisation de la lumière incidente au centre de la cavité sur les premières couches du miroir diélectrique.

Cela permet d'obtenir des pixels de taille submicronique.

D'autres caractéristiques et avantages de ce procédé ressortiront encore de la description qui suit.

Cette description est purement illustrative et non limitative. Elle doit être lue en regard des dessins annexés sur lesquels :

- les figures 1a à 1d illustrent une mise en oeuvre générale du procédé conforme à l'invention,
- les figures 2a à 2e illustrent une variante de mise en oeuvre du procédé conforme à l'invention.
- Les figures 3a à 3c illustrent une seconde variante de mise en oeuvre du procédé conforme à l'invention.

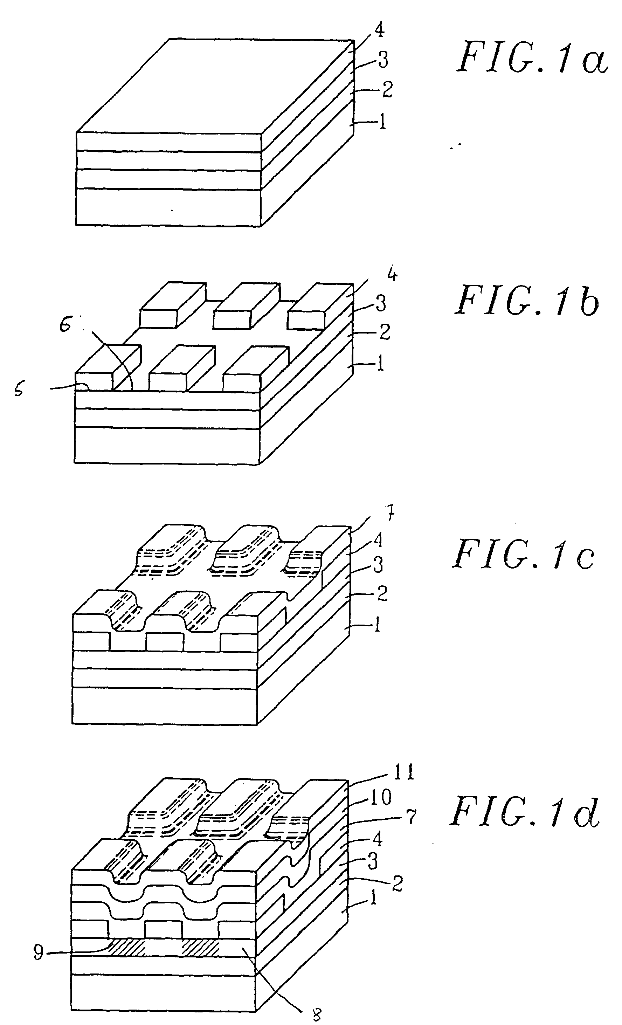

Sur les figures 1a à 1d, on a référencé par 1 le substrat, 2 le miroir inférieur d'une telle hétérostructure et par 3 les couches à puits quantiques.

Le miroir inférieur est composé d'une vingtaine d'alternances de deux couches semiconductrices d'indices légèrement différents (GaAs/$Al_xGa_{1-x}As$).

La croissance des couches semi-conductrices III/V à puits quantiques 3 sur le miroir 2 lui-même épitaxié sur le substrat 1 a été effectuée soit par décomposition thermique de polyalkyle de l'élément III et de polyalkyle de l'élément V, soit par décomposition thermique de polyalkyle de l'élément III et de composés hydrogénés de l'élément V, soit par d'autres techniques classiques.

Selon le présent exemple, l'hétérostructure à puits quantiques épitaxiés est constituée d'alternances GaAs/GaAlAs.

On dépose sur les couches à puits quantiques 3 une couche diélectrique 4 de type SiN (positive) d'une épaisseur de 0,1 μm selon les conditions de Bragg à λ = 0, 85 μm.

Le dépôt est par exemple un dépôt chimique assisté par lumière (RTCVD).

Par photolitographie et attaque on grave cette couche diélectrique positive de façon à former une matrice N x N de plots 4 (figure 1b) équidistants de manière à ce que le masque gravé formé des plots délimite des régions 5 de la face supérieure de la couche 3 à puits quantiques recouvertes par lesdits plots et des régions non recouvertes 6 en regard des évidements résultant de la gravure (figure 1b).

On encapsule, selon la méthode utilisée pour la couche positive, la demi-structure d'une couche diélectrique 7 de type $Si_xO_y$ (de préférence SiO) d'épaisseur 436 nm correspondant à une épaisseur calculée selon les conditions de Bragg et qui est suffisamment épaisse pour induire un mélange d'alliage important (figure 1c).

Pour une longueur d'onde de travail de 850 nm, l'épaisseur de Bragg doit être de 436 nm correspondant à k = 1. En référence à la formule de Bragg pour un indice normal à la surface de l'échantillon :

$$E = \lambda/4n + k\lambda/2n$$

On procède au recuit de rediffusion d'alliage (850°C / 4 heures), ce qui conduit au mélange d'alliage dans les régions 9 en contact avec la couche de type SiO (figure 1d) et à la matrice de pixels 8 correspondant au niveau des régions 5 recouvertes par lesdits plots.

On termine alors le miroir de Bragg en déposant successivement une autre couche positive 10 puis une autre couche négative 11, la structure pixellisée étant automatiquement alignée.

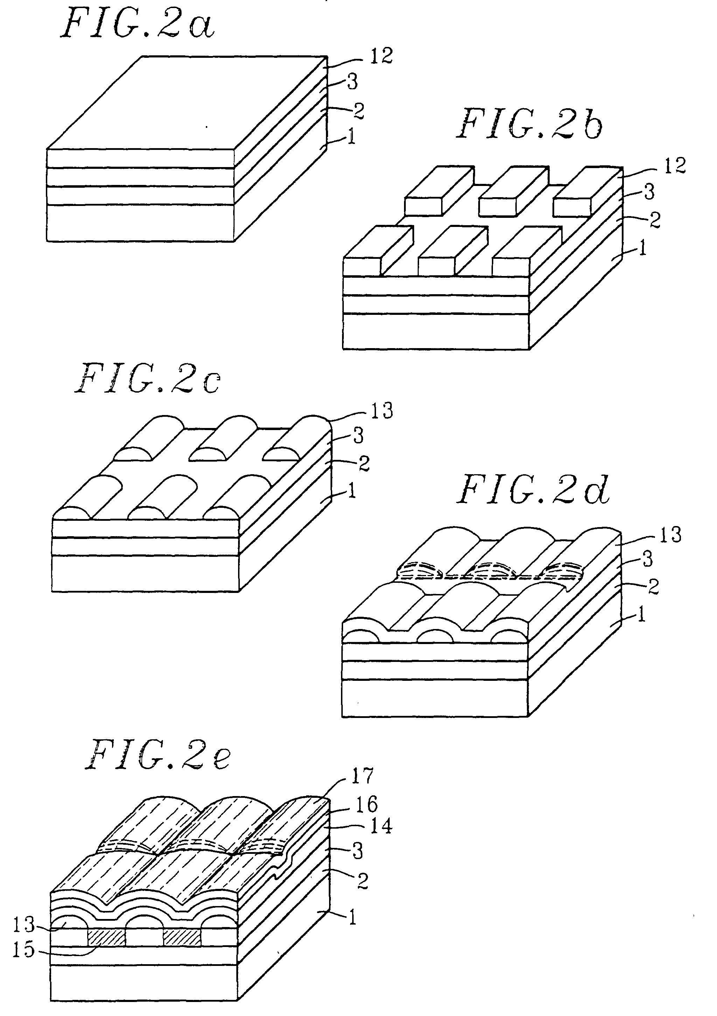

Selon la variante illustrée à la figure 2, on dépose sur toute la surface de l'échantillon une couche de type SiN (positive) 12 ne correspondant pas à une épaisseur calculée selon les conditions de Bragg (figure 2a).

Par lithographie et attaque, on grave cette couche de façon à ne laisser que la surface des pixels recouverte (figure 2b).

On réalise une courbure 13 déterminée sur les plots de SiN permettant de faire un effet de lentille qui focalise la lumière incidente au centre de la cavité (figure 2c). Pour cela, deux variantes sont possibles :

- L'échantillon est monté sur une platine tournante inclinée par rapport à l'incidence d'un faisceau d'ions réactifs. L'inclinaison permet de régler le rayon de la courbure des lentilles.
- La courbure est réalisée par une série de niveaux de masquage et d'attaques par RIE du bord de ces couches avec des masques de plus en plus petits.

A partir de cette étape, la phase de la réflectivité sur le pixel est optimisée.

On dépose sur toute la surface gravée et usinée une couche 14 de type SiO (négative). L'épaisseur de cette dernière couche doit correspondre à une épaisseur calculée selon les conditions de Bragg et être suffisamment épaisse pour induire un mélange d'alliage important (figure 2d).

Ainsi l'épaisseur selon les conditions de Bragg est : E = λ / 4n + k λ /2n et E > 400 nm, ce qui donne pour une longueur d'onde de travail de 850 nm, E = 436 nm correspondant à k = 1.

On procède au recuit de rediffusion d'alliage à une température d'environ 850°C pendant 4 heures, seules les régions 15 sous la couche de type SiO sont remélangées (figure 2e).

On termine alors le miroir de Bragg diélectrique par le dépôt d'une couche de SiN 16, puis de SiO 17, la structure pixellisée étant automatiquement alignée.

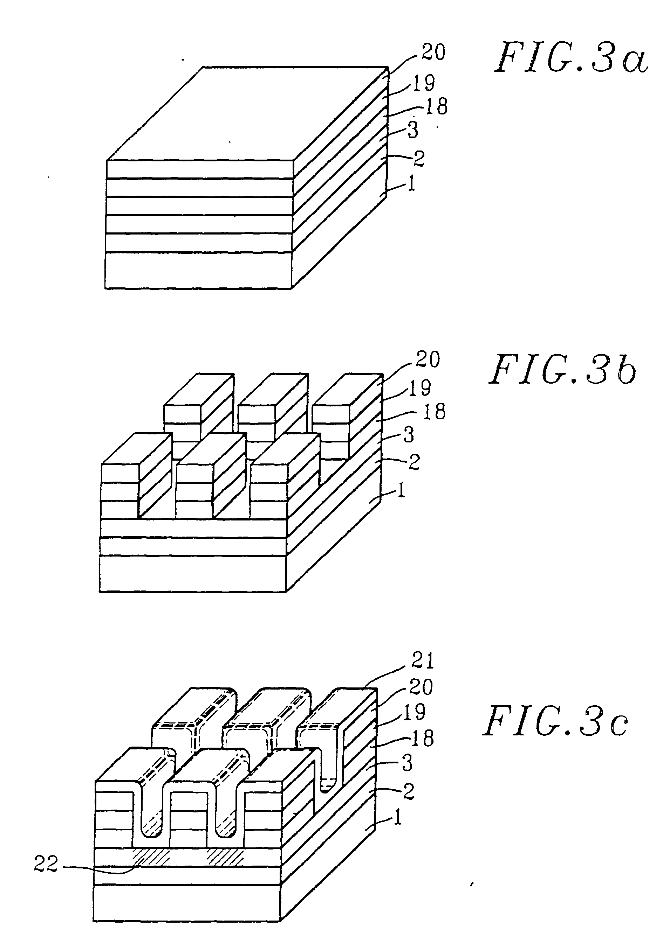

Selon une troisième variante en référence à la figure 3, sur la totalité de la surface de la couche à puits quantiques 3, on dépose successivement trois couches d'épaisseur correspondant à une épaisseur calculée selon les conditions de Bragg : une couche 18 de SiN (couche positive), une couche 19 de SiO (couche négative), puis une couche 20 de SiN (couche positive).

Par lithographie comme précédemment, on grave le miroir de façon à définir des plots (figure 3b).

On dépose la dernière couche SiO 21 du miroir (couche négative) définie ci-dessus, puis on effectue le recuit du mélange (850°C / 4 heures). L'épaisseur de cette dernière couche doit correspondre à une épaisseur calculée selon les conditions de Bragg et être suffisamment épaisse pour induire un mélange d'alliage important 22.

Ainsi l'épaisseur de Bragg est : $E = \lambda / 4n + k \lambda / 2n$ et $E > 400$ nm, ce qui donne pour une longueur d'onde de travail de 850 nm, $E = 436$ nm correspondant à $k = 1$.

Après cette étape, l'intensité de la réflectivité est maximale sur le pixel. La phase de cette réflectivité est également optimisée sur le pixel grâce à l'effet de lentille obtenu avec cette dernière couche qui doit contourner les motifs existants.

## Revendications

1. Procédé de réalisation d'une matrice de composants à puits quantiques de structure verticale fonctionnant en "tout optique » c'est-à-dire dont l'excitation de la zone active se fait optiquement, notamment les portes optiques formées de bistables, les lasers à émission par la surface, les amplificateurs ou les modulateurs tous pompés optiquement, lesdits composants étant formés d'hétérostructures à puits quantiques à base de composés III/V, comprises entre un miroir de Bragg inférieur et un miroir de Bragg supérieur, comprenant les étapes suivantes :

   a) on forme un miroir inférieur (2) composé d'une ou plusieurs alternances de couches semi-conductrices, par épitaxie sur un substrat (1),
   b) on dépose par épitaxie sur le miroir précédent une zone active (3) formée d'hétérostructures à puits quantiques, caractérisé en ce que
   c) on dépose sur ladite zone active une couche diélectrique (4) dont l'épaisseur est donnée par la condition de Bragg et qui fonctionne comme une couche positive, c'est-à-dire une couche mince diélectrique qui ne provoque par de modification de composition de l'hétérostructure de la zone active (3) après recuit,
   d) on grave la couche diélectrique (4) de façon à former un masque d'autoalignement définissant des motifs en forme de plots de telle manière que le masque délimite sous forme matricielle des régions (5) de la face supérieure de la zone active recouvertes et des régions (6) non recouvertes en regard des évidements dus à la gravure de la couche diélectrique,
   e) on encapsule d'une couche diélectrique négative (7), c'est-à-dire une couche mince diélectrique qui provoque une modification de composition de l'hétérostructure de la zone active (3) après recuit, dont l'épaisseur est donnée par la condition de Bragg à la longueur d'onde de travail, la face supérieure de la demi-structure formée à l'étape d)
   f) on traite thermiquement la demi-structure encapsulée à une température appropriée pour induire le désordre d'alliage (9) dans les parties de la zone active dont la face supérieure n'est pas recouverte par le masque gravé et former ainsi dans la zone active la matrice de pixels (8) correspondante, de façon à obtenir le miroir de Bragg supérieur.

2. Procédé selon la revendication 1, caractérisé en ce que la couche à puits quantiques est un semi-conducteur III-V, binaire, ternaire ou quaternaire à base de GaAs ou d'InP.

3. Procédé selon la revendication 2, caractérisé en ce que la couche active à puits quantiques est du type $GaAs/Ga_{1-X}Al_XAs$ avec $0 \leq x \leq 1$ ou $GaAs/Ga_{1-X}In_XAs$ avec $O \leq x \leq 1$ ou $InP/In_XGa_{1-X}As/In_XGa_{1-X}AsyP_{1-y}$ avec $O \leq x \leq 1$ et $O \leq y \leq 1$.

4. Procédé selon la revendication 1, caractérisé en ce que la couche positive est du type $Si_XN_Y$ ou éventuellement $SiO_XN_Y$ avec dans ce dernier cas y suffisamment grand pour que la couche à base de $SiO_XN_Y$ se comporte comme une couche positive.

5. Procédé selon la revendication 1, caractérisé en ce que la couche négative est du type $Si_XO_Y$ ou éventuellement $SiO_XN_Y$ avec y suffisamment petit pour que la couche à base de $SiO_XN_Y$ se comporte comme une couche négative.

6. Procédé selon l'une des revendications précédentes, caractérisé en ce que chaque plot est formé d'une couche positive présentant une courbure de façon à former une lentille de focalisation de la lumière incidente au centre de la couche active des pixels.

7. Procédé selon la revendication 6, caractérisé en ce que l'épaisseur de la couche positive est inférieure à une épaisseur calculée selon les conditions de Bragg.

8. Procédé selon l'une des revendications 1 à 5, caractérisé en ce que chaque plot est formé à partir de la face supérieure de la région recouverte, d'une couche positive, d'une couche négative, d'une autre couche positive, lesdites couches ayant toutes une épaisseur égale à une épaisseur calculée selon les conditions de Bragg.

**9.** Procédé selon l'une des revendications précédentes, caractérisé en ce qu'après traitement thermique, on recouvre la couche négative (7) d'une ou plusieurs alternances de couches diélectriques (10,11) d'indice de réfraction différent, ce nombre total de couches devant être pair pour assurer le maximum de réflectivité.

**Patentansprüche**

**1.** Verfahren zum Herstellen einer Matrix aus Quantum-well-Komponenten mit vertikaler Struktur, welche "vollständig optisch" funktioniert, d.h., bei der die Anregung der aktiven Zone optisch erfolgt, insbesondere die aus bistabilen Elementen gebildeten optischen Gatter, die Laser mit Emission durch die Fläche, die Verstärker oder die Modulatoren, welche alle optisch gepumpt werden, wobei diese Bauteile aus Quantum-well-Heterostrukturen auf der Basis von III/V-Verbindungen ausgebildet sind, die zwischen einem unteren Bragg-Spiegel und einem oberen Bragg-Spiegel enthalten sind, welches die folgenden Schritte umfaßt:

a) ein unterer Spiegel (2), der aus einer oder mehreren Wechselschichtungen an Halbleiterschichten zusammengesetzt ist, wird per Epitaxie auf einem Substrat (1) ausgebildet,
b) auf dem vorgenannten Spiegel wird per Epitaxie eine aus Quantum-well-Heterostrukturen gebildete aktive Zone (3) aufgetragen,
c) auf der aktiven Zone wird eine dielektrische Schicht (4) aufgetragen, deren Dicke durch die Bragg-Bedingung gegeben ist und die als eine positive Schicht funktioniert, d.h. eine dünne dielektrische Schicht, die nach der Temperung keine Modifikation der Zusammensetzung der Heterostruktur der aktiven Zone (3) hervorruft,
d) die dielektrische Schicht (4) wird derart geätzt, daß sie eine Selbstausrichtungsmaske bildet, welche Motive in Form von Punkten derart definiert, daß die Maske in Form einer Matrix bedeckte Regionen (5) der Oberseite der aktiven Zone und unbedeckte Regionen (6) begrenzt, welche von der Ätzung der dielektrischen Schicht hervorgerufenen Aussparungen gegenüberstehen,
e) die Oberseite der im Schritt d) gebildeten Halbstruktur wird mit einer dielektrischen negativen Schicht (7) eingekapselt, d.h. einer dünnen dielektrischen Schicht, die nach der Temperung eine Modifikation der Zusammensetzung der Heterostruktur der aktiven Zone (3) hervorruft, deren Dicke durch die Bragg-Bedingung bei der Arbeitswellenlänge gegeben ist,
f) die eingekapselte Halbstruktur wird bei einer Temperatur wärmebehandelt, die geeignet ist, die Legierungsfehlordnung (9) in den Abschnitten der aktiven Zone zu induzieren, deren Oberseite nicht durch die geätzte Maske bedeckt ist, und somit die entsprechende Pixelmatrix (8) in der aktiven Zone auszubilden, um den oberen Bragg-Spiegel zu erhalten.

**2.** Verfahren nach Anspruch 1, dadurch gekennzeichnet, daß die Quantum-well-Schicht ein binärer, ternärer oder quaternärer III-V-Halbleiter auf der Basis von GaAs oder InP ist.

**3.** Verfahren nach Anspruch 2, dadurch gekennzeichnet, daß die aktive Quantum-well-Schicht vom $GaAs/Ga_{1-x}Al_xAs$-Typ mit $O \leq x \leq 1$ oder vom $GaAs/Ga_{1-x}In_xAs$-Typ mit $O \leq x \leq 1$ oder vom $InP/In_xGa_{1-x}As/In_xGa_{1-x}As_yP_{1-y}$-Typ mit $O \leq x \leq 1$ und $0 \leq y \leq 1$ ist.

**4.** Verfahren nach Anspruch 1, dadurch gekennzeichnet, daß die positive Schicht vom $Si_xN_y$- oder ggf. $SiO_xN_y$-Typ ist, wobei im letzteren Fall y ausreichend groß ist, damit sich die Schicht auf der Basis von $SiO_xN_y$ wie eine positive Schicht verhält.

**5.** Verfahren nach Anspruch 1, dadurch gekennzeichnet, daß die negative Schicht vom $Si_xO_y$- oder ggf. $SiO_xN_y$-Typ ist, wobei y ausreichend klein ist, damit sich die Schicht auf der Basis von $SiO_xN_y$ wie eine negative Schicht verhält.

**6.** Verfahren nach einem der vorgenannten Ansprüche, dadurch gekennzeichnet, daß jeder Punkt durch eine positive Schicht gebildet wird, welche eine Krümmung aufweist, derart, daß eine Fokusierlinse für das auf das Zentrum der aktiven Pixelschicht einfallenden Licht gebildet wird.

**7.** Verfahren nach Anspruch 6, dadurch gekennzeichnet, daß die Dicke der positiven Schicht geringer als eine Dicke ist, die entsprechend den Bragg-Bedingungen berechnet ist.

**8.** Verfahren nach einem der Ansprüche 1 bis 5, dadurch gekennzeichnet, daß jeder Punkt ausgehend von der Oberseite der bedeckten Region aus einer positiven Schicht, aus einer negativen Schicht, aus einer weiteren positiven Schicht gebildet wird, wobei die genannten Schichten alle eine Dicke aufweisen, die gleich einer nach den Bragg-Bedingungen berechneten Dicke ist.

**9.** Verfahren nach einem der vorgenannten Ansprüche, dadurch gekennzeichnet, daß nach der Wärmebehandlung die negative Schicht (7) mit einer oder mehreren Wechselschichtungen an dielektrischen Schichten (10,11) mit unterschiedlichem Brechungsindex bedeckt wird, wobei die Gesamtzahl der Schichten gerade sein sollte, um das Maximum an Reflektivität sicherzustellen.

**Claims**

1. A process for producing a matrix of vertically structured quantum well components functioning in "all optical", in other words in which the active zone is excited optically, particularly optical gates formed of bistables, lasers with surface emission, amplifiers or modulators all pumped optically, the said components being formed of compound III/V-based quantum well heterostructures, lying between a lower Bragg mirror and an upper Bragg mirror, comprising the following steps:

   a) a lower mirror (2) composed of one or several alternations of semiconductor layers is formed by epitaxy on a substrate (1),
   b) an active zone (3) made up of quantum well heterostructures is deposited by epitaxy on the previously mentioned mirror,
   c) a dielectric layer (4) is deposited on the said active zone, with a thickness that is given by the Bragg condition and that functions like a positive layer, in other words a thin dielectric layer that does not cause any change to the composition of the heterostructure of the active zone (3) after annealing,
   d) the dielectric layer (4) is etched to form a self-aligning mask defining pad-shaped patterns such that the mask delimits covered regions (5) of the upper face of the active zone and uncovered regions (6) facing the recesses due to etching of the dielectric layer, in matrix form,
   e) the upper face of the half-structure formed in step d) is encapsulated with a negative dielectric layer (7), in other words a thin dielectric layer that modifies the composition of the heterostructure of the active zone (3) after annealing, the thickness of which is given by the Bragg condition at the working wavelength,
   f) the encapsulated half-structure is heat treated at an appropriate temperature to induce disorder of the alloy (9) in the parts of the active zone in which the upper face is not covered by the etched mask, to form the corresponding pixel matrix (8) in the active zone, and then to produce the upper Bragg mirror.

2. Process according to claim 1, characterized in that the quantum well layer is a binary, ternary or quaternary GaAs or InP-based III-V semiconductor.

3. Process according to claim 2, characterized in that the quantum well active layer is of the type GaAs/$Ga_{1-x}Al_xAs$ with $0 \leqq x \leqq 1$, or GaAs/$Ga_{1-x}In_xAs$ with

$0 \leqq x \leqq 1$ or InP/$In_xGa_{1-x}As$/$In_xGa_{1-x}As_yP_{1-y}$ with $0 \leqq x \leqq 1$ and with $0 \leqq y \leqq 1$.

4. Process according to claim 1, characterized in that the positive layer is of type $Si_xN_y$, or possibly $SiO_xN_y$ and in this case y is large enough to enable the $SiO_xN_y$ based layer to behave as a positive layer.

5. Process according to claim 1, characterized in that the negative layer is of type $Si_xO_y$, or possibly $SiO_xN_y$ and in this case y is small enough to enable the $SiO_xN_y$ based layer to behave as a negative layer.

6. Process according to any one of the preceding claims, characterized in that each pad is composed of a positive layer with a curvature forming a focusing lens that focuses incident light at the center of the active layer of the pixels.

7. Process according to claim 6, characterized in that the thickness of the positive layer is less than the thickness calculated according to Bragg conditions.

8. Process according to one of claims 1 to 5, characterized in that, starting from the upper side of the covered region and in order, each pad is composed of a positive layer, a negative layer and another positive layer, these said layers all having a thickness equal to a thickness calculated according to Bragg conditions.

9. Process according to any one of the preceding claims, characterized in that after the heat treatment, the negative layer (7) is covered with one or several alternations of dielectric layers (10, 11) with different refraction indexes, the total number of layers being even to maximize the reflectivity.

FIG.1α

FIG.1b

FIG.1c

FIG.1d

*FIG.2a*

12
3
2
1

*FIG.2b*

12
3
2
1

*FIG.2c*

13
3
2
1

*FIG.2d*

13
3
2
1

*FIG.2e*

17
16
14
3
2
1
13
15

FIG.3a

20
19
18
3
2
1

FIG.3b

20
19
18
3
2
1

FIG.3c

21
20
19
18
3
2
1

22